# EUROPÄISCHE PATENTSCHRIFT

(11) **EP 0 806 553 B1**
(45) Veröffentlichungstag und Bekanntmachung des Hinweises auf die Patenterteilung: **07.08.2002**
(21) Anmeldenummer: 97106052.0
(22) Anmeldetag: 12.04.1997
(51) Int. Cl.: F01N 3/02, F01N 3/20

(54) **Verfahren zur Abgasreinigung bei Dieselmotoren**
Method to purify the exhaust gas of Diesel engines
Méthode de purification de gaz d'échappement de moteurs diesel

(30) Priorität: 08.05.1996 DE 19618397
(43) Veröffentlichungstag der Anmeldung: 12.11.1997
(73) Patentinhaber: Bayerische Motoren Werke Aktiengesellschaft, 80788 München (DE)
(72) Erfinder: Schenkermayr, Günther, 3352 St. Peter (AT)

(56) Entgegenhaltungen:
- EP-A- 0 405 310
- DE-A- 4 117 676
- GB-A- 2 084 898
- PATENT ABSTRACTS OF JAPAN vol. 095, no. 008, 29.September 1995 & JP 07 119444 A (HINO MOTORS LTD), 9.Mai 1995,
- PATENT ABSTRACTS OF JAPAN vol. 016, no. 232 (M-1256), 28.Mai 1992 & JP 04 047119 A (NISSAN MOTOR CO LTD), 17.Februar 1992,

## Beschreibung

Die Erfindung geht gemäß dem Oberbegriff des Patentanspruches 1 von der EP-A 0 405 310 aus.

Aus diesem Dokument ist ein Verfahren zur Regeneration eines Rußfilters in der Abgasanlage eines Dieselmotors bekannt. Hierbei ist dem Rußfilter stromauf ein Oxydatlons-Katalysator benachbart zugeordnet, dessen Konversions-Temperatur in Abhängigkeit der Rußbeladung des Rußfilters gesteuert erhöht wird durch stromauf des Katalysators zusätzlich eingedüsten Brennstoff zur Steigerung der Konversionsrate, um bei relativ niedrigen Abgastemperaturen die Zündtemperatur des Dieselrußes von ca. 600°C sicher zu erreichen.

Bekanntlich wird dem Dieselruß beim Durchgang durch einen in üblicher Weise wirkenden Katalysator ein erheblicher Anteil der angelagerten, leicht flüchtigen HC-Verbindungen entzogen, so dass ein relativ trockener, trotz Additiven schwer entzündbarer Ruß im Filter zur Ablagerung gelangt. Bei dem bekannten Verfahren werden bei der durch den Brennstoffzusatz gesteigerten Konversion gebildete, überschüssige HC-Anteile dem im Filter abgelagerten Ruß zugeführt und damit die Zündtemperatur des Rußes zwar günstig beeinflusst, jedoch nicht in einem wünschenswerten Umfang.

Der Erfindung liegt daher die Aufgabe zugrunde, das im Oberbegriff des Patentanspruches 1 beschriebene Verfahren mit den hierzu angegebenen Mitteln derart zu verbessern, dass im wesentlichen stets zum Abbrennen des im Filter zurückgehaltenen Rußes dessen niedrigste Entzündungstemperatur gegeben ist.

Diese Aufgabe ist mit dem Patentanspruch 1 gelöst in der Weise, dass ein flüssiger Brennstoff bis zu einer gegenüber der jeweilig üblichen, maximalen Katalysator-Konversionstemperatur um ca. 30 - 60 % in Grad Celsius niedrigeren Temperatur in einer solchen Menge gesteuert/geregelt zugegeben wird, dass im Rußfilter eine Rußbefeuchtung erzielt wird.

Der Vorteil der Erfindung ist neben der erheblichen Absenkung der Entzündungstemperatur in Verbindung mit einem sicheren Rußabbrennen weiter in der freien Platzierung des jeweiligen Katalysators zwischen Rußfilter und Dieselmotor zu sehen, da mit der Rußbefeuchtung ein unmittelbar benachbartes Aufheizen des Rußfilters durch einen jeweiligen Katalysator vorteilhaft entfallen kann.

Zur Erzielung einer effektiven Rußbefeuchtung wird in Ausgestaltung der Erfindung mit der Brennstoff-Zugabe in die Abgasführung unterhalb der Anspring-Temperatur des jeweiligen Katalysators begonnen, weil damit der Anteil des zugesetzten Brennstoffes zur Rußbefeuchtung mit oder ohne dem Rußfilter vorgeschaltetem Katalysator relativ hoch ist.

Mit der Erfindung ist es in vorteilhafter Weise möglich, den Brennstoff in den Rußfilter und/oder stromauf des Rußfilters in die Abgasführung zuzugeben.

Weiter ergibt die Erfindung den zusätzlichen Vorteil des von der jeweiligen Katalysator-Anordnung in der Abgasführung frei wählbaren Ortes der Brennstoff-Zugabe, wobei der Brennstoff mittels einer gesonderten Vorrichtung eingedüst wird. Schließlich können die Zyklen der Rußbefeuchtung in Abhängigkeit von Parametern des Rußfilters, des Abgases und weiterer Motorparameter kennfeldgesteuert werden, womit bei optimalem Rußabbrennen ein Minimum an Brennstoffverbrauch erzielbar wird.

Die Erfindung ist im Folgenden beschrieben:

Bei einem Verfahren zur Abgasreinigung bei Dieselmotoren durchströmt in einer Abgasführung das Abgas einen Oxydations-Katalysator und/oder einen SCR- bzw. Denox-Katalysator sowie einen Rußfilter. Weiter wird zur HC-Anreicherung des Rußes im Rußfilter in die Abgasführung ein flüssiger Brennstoff temperaturgesteuert zugegeben. Da bekanntlich dem Dieselruß beim Durchgang durch einen in üblicher Weise wirkenden Katalysator aufgrund der Konversion die leichtflüchtigen HC-Verbindungen entzogen werden, wird mit der gesteuerten Brennstoffzugabe gemäß der gattungsbildenden EP-A 0 405 310 versucht, dem Ruß im Filter stromab des jeweiligen Katalysators gasförmige HC-Verbindungen zur Absenkung der Ruß-Zündtemperatur zuzuführen, wobei der stromauf des Rußfilters eng benachbarte Katalysator der jeweiligen Bauart mit seiner Konversionswärme wesentlich zur Rußentzündung beiträgt.

Zur sicheren Entzündung des im Rußfilter abgelagerten Rußes bei gleichzeitiger Entkoppelung der nachteiligen baulichen Kombination von jeweiligem Katalysator und Rußfilter wird erfindungsgemäß das Verfahren der Abgasreinigung dergestalt verbessert, dass der Brennstoff bis zu einer gegenüber der jeweilig üblichen, maximal zulässigen Katalysator-Konversionstemperatur um ca. 30 - 60 % in Grad Celsius niedrigeren Temperatur in einer solchen Menge gesteuert/geregelt zugegeben wird, dass im Rußfilter eine Rußbefeuchtung erzielt wird.

Zur Erzielung einer effektiven Rußbefeuchtung nach einer vorbestimmt gesteuert/geregelt eingeleiteten Rußentzündung zum Freibrennen des Rußfilters bei minimalem Brennstoffverbrauch erfolgt der Beginn der Brennstoff-Zugabe in die Abgasführung wesentlich unterhalb der Anspring-Temperatur des jeweiligen Katalysators; als Obergrenze der Zugabe kann z.B. die Anspring-Temperatur plus ≈ 200°C gewählt sein.

Die Erfindung ermöglicht es in baulich vorteilhafter Weise unter Verwendung einer bekannten gesonderten Vorrichtung zum Eindüsen des Brennstoffes diesen direkt in den Rußfilter und/oder stromauf nah benachbart in die Abgasführung einzugeben. Da mit dieser Verfahrensweise der zugesetzte Brennstoff durch keinen der vorsehbaren, einzeln oder in einer Kombination anordbaren Katalysatoren durchgeschleust werden muss, ergibt sich hiermit in vorteilhafter Weise ein minimaler Verbrauch an zusätzlichem Brennstoff, der bei einem Dieselmotor vorzugsweise der mitgeführte Kraftstoff sein kann.

Vorteilhaft werden die Zyklen der Rußbefeuchtung und damit verbunden das Rußabbrennen kennfeldgesteuert, wobei als funktionsabhängige Parameter wegstreckenabhängige Beladungsintervalle und/oder die Abgastemperatur und/oder der Filtergegendruck und/oder sonstige Motorparameter dienen können.

Das erfindungsgemäße Verfahren ist besonders vorteilhaft zu betreiben mit einem Oxydations-Katalysator und/oder einem SCR-Katalysator mit integriertem Oxydations-Katalysator stromauf des Rußfilters in einer motornahen Anordnung in einer Abgasführung, in die der Rußbefeuchtungs-Brennstoff mittels einer gesonderten Vorrichtung stromab des jeweiligen Katalysators nahe vor oder in den Rußfilter eingedüst wird. Die motornahe Anordnung des jeweiligen Katalysators ergibt eine hohe Konversionsrate mit vorteilhafter Abgastemperaturerhöhung stromauf des befeuchteten Rußfilters, womit in vorteilhafter Weise eine additiv gestützte Regeneration des Rußfiltersystems auch im unteren Lastbereich erzielt wird.

Mit der erfindungsgemäß gezielten Rußkonditionierung lässt sich der Regenerationsbereich von Additiv-Filtersystemen auf den gesamten Motor-Betriebsbereich vorteilhaft ausdehnen mit dem weiteren Vorteil einer wesentlichen Verringerung des Energieaufwandes für die Regeneration gegenüber Filtersystemen mit externer Regenerationsenergie.

Im übrigen kann bei Anordnung eines dem bekanntlich eine hohe Wärmekapazität mit abgesenkten Abgastemperaturen aufweisenden Rußfilter nachgeschalteten SCR- bzw. Denox-Katalysators eine bessere Anpassung des Abgastemperaturverlaufes vor diesem Katalysator an den Wirkungsbereich eines üblichen Pt/Al₂O₃-Denox-Katalysators erreicht werden.

## Patentansprüche

1. Verfahren zur Abgasreinigung bei Dieselmotoren,
- wobei in einer Abgasführung das Abgas einen Oxydationskatalysator und/oder einen SCR-Katalysator (Denox-Kat) sowie einen Rußfilter durchströmt und
- in die Abgasführung zur HC-Anreicherung ein entsprechender Brennstoff temperaturgesteuert zugegeben wird,
**dadurch gekennzeichnet,**
- **dass** jeweils ein Oxydationskatalysator und/oder ein SCR-Katalysator mit integriertem Oxydationskatalysator stromauf des Rußfilters in der Abgasführung relativ motornah betrieben wird,
- **dass** ein flüssiger Brennstoff in den Rußfilter und/oder stromauf des Rußfilters, jedoch stromab des jeweiligen Katalysators in die Abgasführung eingegeben wird,
- **dass** der Brennstoff bis zu einer gegenüber der jeweilig üblichen, maximal zulässigen Katalysator-Konversionstemperatur um ca. 30 - 60 % in Celsius niedrigeren Temperatur in einer solchen Menge gesteuert/geregelt zugegeben wird, dass im Rußfilter eine Rußbefeuchtung erzielt wird.

2. Verfahren nach Anspruch 1,
**dadurch gekennzeichnet, dass** mit der Brennstoffzugabe in die Abgasführung unterhalb der Anspringtemperatur des jeweiligen Katalysators begonnen wird, höchstens jedoch ungefähr 200°C über der Anspringtemperatur.

3. Verfahren nach den Ansprüchen 1 und 2,
**dadurch gekennzeichnet, dass** der Brennstoff mittels einer gesonderten Vorrichtung eingedüst wird.

4. Verfahren nach einem oder mehreren der Ansprüche 1 bis 3,
**dadurch gekennzeichnet, dass** ggf. zusätzlich ein Oxydationskatalysator oder ein SCR-Katalysator mit integriertem Oxydationskatalysator stromab des Rußfilters in der Abgasführung betrieben wird.

5. Verfahren nach einem oder mehreren der Ansprüche 1 bis 4,
**dadurch gekennzeichnet, dass** Zyklen der Rußbefeuchtung in Abhängigkeit von Belastungsintervallen und/oder der Abgastemperatur und/oder des Filtergegendruckes und/oder von Motorparametem kennfeldgesteuert werden.

## Claims

1. A method of purifying the exhaust gas on diesel engines,
- wherein the exhaust gas in an exhaust-gas system flows through an oxidation catalyst and/or an SCR catalyst (denox cat.) and a soot filter and
- a suitable fuel is supplied in temperature-controlled manner to the exhaust-gas system in order to increase the proportion of hydrocarbons,
**characterised in that**
- an oxidation catalyst and/or an SCR catalyst with an incorporated oxidation catalyst are operated in the exhaust-gas system upstream of the soot filter and relatively near the engine,
- a liquid fuel is introduced into the soot filter and/or into the exhaust-gas system upstream of the soot filter but downstream of the respective catalyst, and
- the fuel is introduced under open-loop/closed-loop control, up to a temperature about 30 - 60% lower in degrees Celsius than the normal maximum permissible catalyst conversion temperature, in a proportion such that the soot in the soot filter is moistened.

2. A method according to claim 1, **characterised in that** the introduction of fuel into the exhaust system begins below the starting temperature of the respective catalyst, or not more than about 200°C above the starting temperature.

3. A method according to claims 1 and 2, **characterised in that** the fuel is injected by a separate device.

4. A method according to one or more of claims 1 to 3, **characterised in that** if required an oxidation catalyst or an SCR catalyst with an incorporated oxidation catalyst is additionally operated in the exhaust system downstream of the soot filter.

5. A method according to one or more of claims 1 to 4, **characterised in that** cycles of soot moistening are controlled in accordance with a performance graph in dependence on loading intervals and/or the exhaust-gas temperature and/or the filter counter-pressure and/or engine parameters.

## Revendications

1. Procédé de nettoyage des gaz d'échappement de moteurs Diesel selon lequel :
- dans une conduite de gaz d'échappement on fait passer les gaz d'échappement dans un catalyseur d'oxydation et/ou un catalyseur SCR (catalyseur Denox) ainsi que dans un filtre à suie et
- dans la conduite des gaz d'échappement on ajoute un combustible correspondant de manière commandée suivant la température pour enrichir en hydrocarbures,
**caractérisé en ce que**
- chaque fois un catalyseur d'oxydation et/ou un catalyseur SCR à catalyseur d'oxydation intégré est mis en oeuvre en amont du filtre à suie dans la conduite des gaz d'échappement, dans une position relativement proche du moteur,
- on introduit un combustible liquide dans le filtre à suie et/ou en amont du filtre à suie mais toutefois en aval du catalyseur respectif dans la conduite des gaz d'échappement,
- jusqu'à une température inférieure à la température de conversion de catalyseur, habituelle, maximale autorisée, d'environ 30-60 % en degrés Celsius, on ajoute le combustible de façon commandée/régulée dans des quantités permettant d'humidifier la suie dans le filtre à particules.

2. Procédé selon la revendication 1,
**caractérisé en ce qu'**
on commence par ajouter du combustible dans la conduite de gaz d'échappement, en dessous de la température d'amorçage du catalyseur respectif, en étant toutefois au plus environ à 200°C au-dessus de la température d'amorçage.

3. Procédé selon les revendications 1 et 2,
**caractérisé en ce qu'**
on injecte le combustible à l'aide d'un dispositif particulier.

4. Procédé selon l'une ou plusieurs des revendications 1 à 3,
**caractérisé en ce que**
le cas échéant on fait fonctionner un catalyseur d'oxydation ou un catalyseur SCR à catalyseur d'oxydation intégré, en plus, en aval du filtre à suie dans la conduite des gaz d'échappement.

5. Procédé selon l'une ou plusieurs des revendications 1 à 4,
**caractérisé en ce qu'**
on commande les cycles d'humidification de la suie selon un champ de caractéristiques en fonction des intervalles de charge et/ou de la température des gaz d'échappement et/ou de la pression antagoniste dans le filtre et/ou de paramètres du moteur.
